# EUROPÄISCHE PATENTSCHRIFT

(11) **EP 3 014 253 B1**
(45) Veröffentlichungstag und Bekanntmachung des Hinweises auf die Patenterteilung: **20.01.2021**
(21) Anmeldenummer: 14720896.1
(22) Anmeldetag: 25.04.2014
(51) Int. Cl.: G01N 21/85, D01G 31/00, G01N 21/89

(54) **VORRICHTUNG IN DER SPINNEREIVORBEREITUNG ZUM ERKENNEN VON FREMDTEILEN AUS KUNSTSTOFF, WIE POLYPROPYLENBÄNDCHEN, -GEWEBE UND -FOLIEN U. DGL. IN ODER ZWISCHEN FASERFLOCKEN, Z.B. AUS BAUMWOLLE**
DEVICE IN SPINNING PREPARATION FOR IDENTIFYING FOREIGN BODIES MADE OF PLASTICS MATERIAL, SUCH AS POLYPROPYLENE TAPES, FABRICS AND FILMS OR THE LIKE IN OR AMONG FIBRE FLOCKS, FOR EXAMPLE MADE OF COTTON
DISPOSITIF POUR LA FILATURE PRÉPARATOIRE PERMETTANT DE RECONNAÎTRE DES CORPS ÉTRANGERS SYNTHÉTIQUES COMME DES RUBANS, TISSUS ET FEUILLES EN POLYPROPYLÈNE ET ANALOGUES DANS OU ENTRE DES FLOCS DE FIBRES, PAR EXEMPLE DE COTON

(30) Priorität: 24.06.2013 DE 102013010468
(43) Veröffentlichungstag der Anmeldung: 04.05.2016
(73) Patentinhaber: Trützschler GmbH & Co. KG, 41199 Mönchengladbach (DE)
(72) Erfinder: ENGELS, Guido, 41569 Rommerskirchen (DE)
(86) Internationale Anmeldenummer: PCT/EP2014/001103
(87) Internationale Veröffentlichungsnummer: WO 2014/206508

(56) Entgegenhaltungen:
- DE-A1- 10 347 240
- DE-A1-102008 031 199
- DE-A1-102008 034 385
- DE-A1-102008 058 254
- DE-A1-102010 055 523

## Beschreibung

Die Erfindung betrifft eine Vorrichtung in der Spinnereivorbereitung zum Erkennen von Fremdteilen aus Kunststoff, wie Polypropylenbändchen, -gewebe und -folien u. dgl. in oder zwischen Faserflocken, z. B. aus Baumwolle.

Ein Problem beim Betrieb von optisch arbeitenden Fremdfaser- oder Fremdteilausscheidern in Spinnereivorbereitungsmaschinen für Baumwolle oder Chemiefasern ist, dass diese helle, farblose oder transparente Kunststoffe (wie z. B. Verpackungsfolien oder Verpackungsgewebe aus Polyethylen oder Polypropylen) wegen des geringen optischen Kontrastes nur unzureichend oder gar nicht erkennen können.

Aus der DE 10 2008 031 199 A1 ist die Verwendung von polarisiertem Licht (Durchlicht) in Kombination mit der gleichzeitigen Bestrahlung mit UV-Licht (Auflicht) bekannt. Es gibt darüber hinaus noch Verpackungsmaterialien und Kunststoffabfälle in Fasermaterialien, welche nicht mit polarisiertem Licht erkennbar sind (nicht transparent) und auch nicht mit UV-Licht erkennbar sind (nicht fluoreszierend).

In der DE 103 47 240 ist ein Verfahren beschrieben, wie Mithilfe von polarisiertem Auflicht der Oberflächenglanz der Fremdteile bestimmt und zur Erkennung ausgewertet werden kann. Nachteilig hat sich gezeigt, dass diese Anordnung weder mit einer klassischen Farberkennung noch mit dem Verfahren mit polarisiertem Durchlicht in einer Inspektionsstelle wegen ihrer gegenseitigen Beeinflussung kombiniert werden kann. Auch die Schaffung einer weiteren Inspektionsstelle in einer Maschine stößt auf Grenzen, da Mindestabstände zwischen den einzelnen Inspektionsstellen zwecks Ausschluss einer gegenseitigen Behinderung eingehalten werden müssen und die Maschinen zu groß werden würden bzw. die Abstände zwischen der Erkennungs- und Ausscheidestelle zu groß werden, so dass die Teile nicht mehr ausgeschieden werden können bzw. zu viel Gutmaterial mit ausgeschieden wird.

Aus der 10 2010 055 523 ist eine Vorrichtung bekannt, welche für die Farberkennung und für die Erkennung des Glanzes verschiedenen Wellenlängen nutzt. Nachteilig hierbei ist, dass die erforderliche Beleuchtung für zwei Wellenlängen ausgelegt werden muss und dabei die Beleuchtung in einem Wellenlängenbereich in ihrer räumlichen Anordnung bzw. in der Wahl der Winkel, mit welcher die Beleuchtung in den Kanal einstrahlt, nicht optimal mit der Beleuchtung in dem anderen Wellenlängenbereich zu ergänzen ist.

Der Erfindung liegt daher die Aufgabe zugrunde, eine Vorrichtung der eingangs beschriebenen Art zu schaffen, die die genannten Nachteile vermeidet, die insbesondere auf konstruktiv einfache Weise die sichere Erkennung von Fremdteilen, z. B. helle, farblose oder transparente Kunststoffe, ermöglicht.

Die Lösung dieser Aufgabe erfolgt durch die kennzeichnenden Merkmale des Anspruchs 1. Die Unteransprüche haben vorteilhafte Weiterbildungen der Erfindung zum Inhalt.

Dadurch, dass das Fasermaterial (Faserflocken) sowie die Fremdteile mit polarisiertem Licht beleuchtet und mit einem Detektor zusammenarbeitet, welcher anhand des reflektierten Lichtes eine gleichzeitige Erkennung der Fremdteile mit Hilfe der Farbinformationen als auch des Oberflächenglanzes ermöglicht, ist auf konstruktiv einfache Art die sichere Erkennung von Fremdteilen, z. B. helle, farblose oder transparente Kunststoffe, verwirklicht.

In einer bevorzugten Ausgestaltung kann als Detektor eine Matrix- oder Zeilenkamera mit gleichzeitiger Erfassung des Polarisationszustandes verwendet werden.

Eine weitere Verbesserung kann dadurch erreicht werden, dass zur Abdeckung einer großen Arbeitsbreite mehrere Detektionsvorrichtungen vorzugsweise in Abschnitten parallel nebeneinander arbeiten.

Vorzugsweise kann das Fasermaterial in einem Kanal aus Glas o. dgl. angeordnet sein. Dabei beträgt bevorzugt der Kamerablickwinkel auf die den Fasermaterialstrom vom Kameraraum trennenden Glasscheiben 90°.

Bevorzugt kann das Fasermaterial durch einen Kanal pneumatisch gefördert werden oder alternativ auf einem Förderband angeordnet sein.

Eine weitere Verbesserung kann dadurch erreicht werden, dass das Fasermaterial auf einer Walze, z. B. Schlagwalze, angeordnet ist. Dabei kann die Walze schnell rotieren.

Eine weitere Verbesserung ergibt sich, wenn die Vorrichtung mit polarisiertem Durchlicht und/oder UV Licht in einer Maschine arbeitet, um die Erkennungssicherheit von farblosen Fremdteilen zu maximieren.

Dabei kann an die Auswerteeinrichtung eine in Förderrichtung nach der Detektionszone angeordnete Ausscheidevorrichtung zum Ausscheiden der Fremdstoffe angeschlossen sein.

Vorzugsweise kann die Detektionsvorrichtung als Zeilenkamera ausgebildet sein. Alternativ ist die Ausbildung als Matrixkamera möglich.

Bevorzugt kann die Detektionsvorrichtung Lichtsensoren und/oder eine Auswerteeinheit umfassen. Weiterhin kann die Vorrichtung mit einer Reflexunterdrückung ausgestattet sein.

Vorzugsweise kann eine Detektion mit Farbe erfolgen.

In einer weiteren Ausgestaltung kann die Detektion mit schwarz/weiß erfolgen.

Eine Verbesserung kann dadurch erfolgen, dass zwischen Lichtquelle und Fasermaterial ein Polarisator angeordnet ist.

Vorzugsweise kann eine Lichtquelle vorhanden sein, die polarisiertes Licht ausstrahlt. Dabei kann das Licht linear, zirkular oder elliptisch polarisiert sein.

Bevorzugt kann der Polarisator an oder innerhalb der Lichtquelle integriert sein.

Eine weitere Verbesserung kann dadurch erfolgen, dass zwischen dem Fasermaterial und der Detektoreinrichtung ein Analysator angeordnet ist.

Dabei kann ein Detektor vorhanden sein, der auch als Analysator wirkt.

Vorzugsweise kann der Analysator an oder innerhalb des Detektors integriert sein.

Vorzugsweise können im Strahlengang Licht reflektierende oder brechende Elemente angeordnet sein.

Bevorzugt können im Strahlengang Licht brechende Elemente angeordnet sein.

Diese können als Spiegel, Prismen oder Linsen ausgebildet sein.

Vorzugsweise ist der Auswerteeinrichtung eine Einrichtung zur Entfernung (Abscheidung) der Fremdteile nachgeschaltet.

Bevorzugt kann die Auswertung und die Entfernungseinrichtung (Abscheideeinrichtung) durch eine Steuer- oder Schalteinrichtung elektrisch miteinander verbunden sein.

Dabei kann die Vorrichtung nach einer Reinigungsvorrichtung angeordnet sein.

Vorzugsweise kann die Vorrichtung in einer Karde oder nach einer Karde angeordnet sein.

Alternativ kann die Vorrichtung nach einem Fremdfaserausscheider angeordnet sein.

Eine weitere Verbesserung kann dadurch erreicht werden, dass zum Erkennen Anisotropien wie doppelbrechende Wirkung der Fremdteile herangezogen wird.

Vorzugsweise kann zum Erkennen selektiv absorbierendes Verhalten (Dichroismus) der Fremdteile herangezogen werden.

Bevorzugt kann zum Erkennen optisch aktives Verhalten (Rotationsdispersion) der Fremdteile herangezogen werden.

Dabei kann die Detektionsvorrichtung aufgrund ihrer Auflösung flächenförmige von faserförmigen Fremdteilen zu unterscheiden vermag.

Eine weitere Verbesserung kann dadurch erreicht werden, dass die Lichtquelle als linienförmige Beleuchtung zur Ausleuchtung der Arbeitsbreite ausgelegt ist.

Dabei kann die Lichtquelle aus mehreren aneinander gereihten Einzellichtquellen zur Ausleuchtung der Arbeitsbreite ausgelegt sein.

Alternativ kann die Lichtquelle aus einer einzelnen, z. B. punktförmigen, Lichtquelle bestehen, welche über eine Projektionsvorrichtung die Ausleuchtung der Arbeitsbreite herstellt.

Vorzugsweise kann das Licht der Lichtquelle durch Reflektoren oder Linsen auf die zu inspizierende Oberfläche gebündelt werden.

Bevorzugt kann die Lichtquelle einen Filter enthalten, welche alle unerwünschten Wellenlängen sperrt und somit nur UV-Licht passieren lässt.

Vorzugsweise kann der Kanal senkrecht oder waagerecht angeordnet sein.

Vorzugsweise kann das Fasermaterial von oben nach unten oder von unten nach oben durch den Kanal gefördert werden.

Vorzugsweise kann die einer Öffnerwalze nachgeordnete Vorrichtung nicht unmittelbar im Abgabebereich der Öffnerwalze angeordnet sein.

Bevorzugt ist die einer Öffnerwalze nachgeordnete Vorrichtung nicht unmittelbar im Abgabebereich der Öffnerwalze angeordnet ist.

Eine weitere Verbessrung kann dadurch erzielt werden, dass das Licht der Beleuchtung ganz oder teilweise mit refraktiven oder diffraktiven Abbildungselementen abgelenkt bzw. geformt wird.

Dabei kann das Licht der Beleuchtung ganz oder teilweise mit Streuscheiben oder Diffusorelementen abgelenkt bzw. geformt werden.

Auch eine Vergleichmäßigung des Lichtes der Beleuchtung ganz oder teilweise mit Streuscheiben oder Diffusorelementen ist vorteilhaft. Alternativ ist die Vergleichmäßigung des Lichtes der Beleuchtung ganz oder teilweise mit refraktiven oder diffraktiven Abbildungselementen möglich.

Vorzugsweise wird das polarisierte Licht durch Beleuchtungskörper erzeugt, deren Lichtquellen aus einem möglichst großen Winkelbereich auf das Fasermaterial einstrahlt. Die Lichtquellen können kreisförmig oder individuell auf das Fasermaterial ausrichtbar angeordnet sind. Sie können auch segmentweise auf einer ebenen Fläche (16) angeordnet sein, beispielsweise einer Leiterplatte.

Die Lichtquellen können mit Fresnellinsen (18) ausgestattet sein.

Weiter vorzugsweise wird das Licht der Beleuchtungskörper ganz oder teilweise mit holografisch abbildenden Diffusionselementen, z. B. Diffusionsfolien, vergleichmäßigt.

Ein für Farberkennung notwendiger Hintergrund wird vorzugsweise mit unpolarisiertem Licht beleuchtet. Hat der Hintergrund eine diffus matte Oberfläche, kann der Hintergrund auch mit polarisiertem Licht beleuchtet werden.

Vorzugsweise werden in der Quelle zur Beleuchtung des Fasermaterials Polarisationsfolien verwendet. Die Polarisationsfolien können auf oder zwischen Glasscheiben laminiert werden.

Das Licht der Beleuchtungskörper kann ganz oder teilweise mit holografisch abbildenden Richtungsablenkungselementen, z. B. Richtungsablenkungsfolien, in seiner Richtung zum Inspektionskanal abgelenkt werden.

Vorzugsweise sind Glasscheiben, die den Fasermaterialstrom vom Kameraraum trennen, entspiegelt.

Die Beleuchtung kann an geeigneten Stellen durch Blenden maskiert werden.

Weiter vorzugsweise ist der Detektor als Kamera ausgebildet, deren Sichtlinie zur Reduzierung des Bauraumes die Kamerasichtlinie durch Spiegel oder Prismen gefaltet wird.

Vorzugsweise weist die Kamera einen Polarisationsfilter als Analysator auf.

Die Kamera kann auch einen Filter aufweisen, der den Durchtritt von UV-Licht und/oder infrarotem Licht verhindert.

Die Lichtquelle für polarisiertes Licht und die Detektoreinrichtung können auf verschiedenen Seiten der Faserflocken angeordnet sein (Durchlichtanordnung). Die Lichtquelle und die Detektoreinrichtung können aber auch auf derselben Seite der Faserflocken angeordnet sein (Auflichtanordnung).

Das Licht der Beleuchtung kann ganz oder teilweise mit Microlinsen und/oder Linsenarrays abgelenkt bzw. geformt werden.

Die Erfindung wird nachfolgend anhand von zeichnerisch dargestellten Ausführungsbeispielen näher erläutert.

Es zeigt:
- Fig. 1: schematisch die erfindungsgemäße Vorrichtung, bei der auf das Fasermaterial (Faserflocken) sowie die Fremdteile eine Quelle mit polarisiertem Licht wirkt und mit einem Detektor zusammenwirkt,
- Fig. 2: schematisch eine Vorrichtung gemäß Fig. 1 mit Zuhilfenahme von Spiegeln,
- Fig. 3: eine Vorrichtung mit mehr als einer Detektionseinrichtung,
- Fig. 4: die Integration der Detektionseinrichtung in einer Maschine mit durchgehendem Förderschacht mit nachfolgender Ausscheidevorrichtung,
- Fig. 5: die Integration der erfindungsgemäßen Vorrichtung direkt hinter einer Öffnerwalze,
- Fig. 6: eine Ausführungsform, bei der die beiden Inspektionsstellen vertauscht sind und
- Fig. 7: die Installation beider Inspektionsstellen nach der Öffnerwalze.

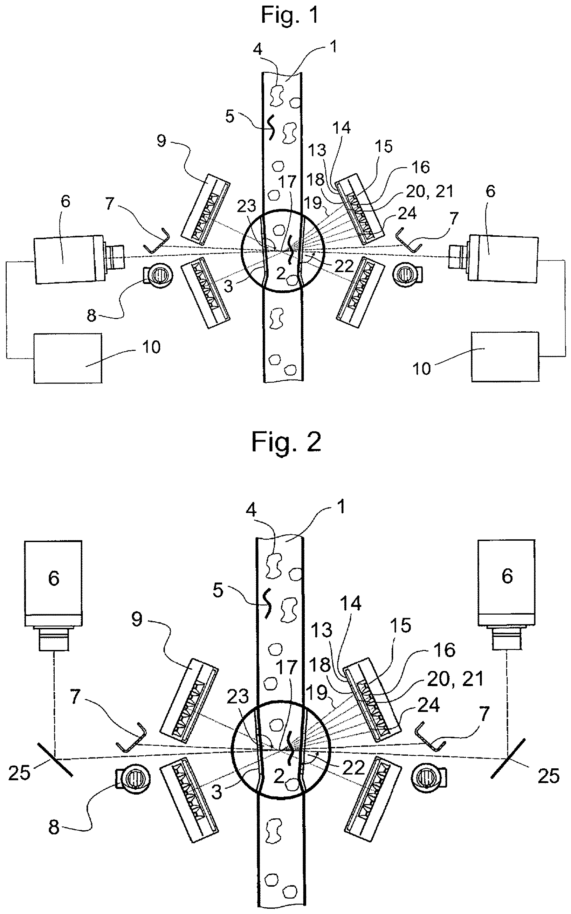

Fig. 1 zeigt eine Vorrichtung, welche obige Nachteile beseitigt und dafür sorgt, dass alle Erkennungsverfahren in einer Vorrichtung bzw. in einer Maschine zur Anwendung kommen können:
Fig. 1 zeigt einen Inspektionskanal 1 mit im Inspektionsbereich 2 transparenten Wänden 3, welcher von Faserflocken 4 und den zu detektierenden Fremdteilen 5 durchströmt wird. Zwei Kameras 6 schauen von jeweils einer Seite in den Kanal 1 und treffen auf der gegenüberliegenden Seite auf einen Hintergrund 7 in Materialfarbe. Zur Beleuchtung des Hintergrundes 7 werden z. B. Leuchtstoffröhren 8 eingesetzt, welche weißes unpolarisiertes Licht im sichtbaren Wellenlängenbereich abstrahlen. Weitere Beleuchtungskörper 9 beleuchten das Fasermaterial z. B. mit weißem polarisiertem Licht.

Das von den Faserflocken 4 oder Fremdteilen 5 reflektierte Licht wird von den Kameras 6 aufgenommen und hinsichtlich Helligkeit und Farbe in der Auswertung 10 analysiert. Vorzugsweise vermag die Kamera 6 hier das Licht in Kanälen im Roten, Grünen oder Blauen Wellenlängenbereich aufzunehmen und separat weiter zu verarbeiten. Diese Farbinformation wird in einer Auswertung verwendet, um Fremdteile 5 aufgrund ihrer Helligkeits- oder Farbabweichung zum Fasermaterial bzw. des Hintergrundes 7 erkennen und nachfolgend auszuscheiden. Neben der Farbinformation kann die Kamera 6 aber auch gleichzeitig den Polarisationszustand des Lichtes, d. h. im einfachsten Fall den Unterschied zwischen unpolarisiertem Licht und polarisiertem Licht, erfassen. Im Falle von Faserflocken, welche das polarisiert aufgestrahlte Licht durch diffuse Reflexion depolarisieren, bzw. im Falle des unpolarisiert beleuchteten Hintergrundes ermittelt die Kamera den Polarisationszustand als unpolarisiert. Im Fall von glänzenden Kunststoffteilen z. B. Folien, PP-Bändern oder dergleichen, wird nun das polarisierte Licht, mit welchem der Kanal beleuchtet wird, an deren glänzender Oberfläche reflektiert, wobei das reflektierte Licht im wesentlichen weiterhin polarisiert bleibt. Die Kamera 6 sieht in diesem Fall also polarisiertes Licht. Da die Kamera 6 in der Lage ist, den Polarisationszustand zu unterscheiden, z. B. zu unterscheiden vermag, ob es sich um polarisiertes oder unpolarisiertes Licht handelt, kann die Auswertung somit auch Faserflocken 4 von glänzenden Fremdteilen 5 unterschieden und diese nachfolgend ausscheiden.

Als Lichtquelle 15 zur Bestrahlung des Fasermaterials und der Fremdteile 5 werden viele kleine verteilte Lichtquellen z. B. LED's verwendet. Das polarisierte Licht wird z. B. über Polarisationsfilter 13 erzeugt. Diese werden vorzugsweise als Polarisationsfolien auf eine Glasscheibe 14 oder zwischen zwei Glasscheiben laminiert. Entscheidend für einen hohen Erfassungsbereich bei der Erkennung der glänzenden Oberfläche ist nun, dass dieses polarisierte Licht aus einem möglichst großen Winkelbereich auf das Material einstrahlt. Eine optimale kreisförmige Anordnung der Lichtquellen 15 oder ein individuelles Ausrichten dieser Lichtquellen 15 auf den Inspektionsort 17 ist jedoch nicht wirtschaftlich realisierbar. Sinnvoller ist es, die Lichtquellen 15 segmentweise auf einer ebenen Fläche 16, z. B. einer elektronischen Leiterplatte, anzuordnen. Da die Lichtquelle 15 dann teilweise nicht auf den eigentlichen Inspektionsort 17 gerichtet ist, wird die Beleuchtung partiell z. B. mit Fresnellinsen 18 ausgestattet, welche das Licht in eine gewünschte Richtung 19 lenken. Alternativ können diese Fresnellinsen 18 auch durch holografisch abbildende Richtungsablenkungsfolien 20 ersetzt werden. Zur Vergleichmäßigung des Lichtes kann es darüber hinaus sinnvoll sein, die Beleuchtung 9 mit weiteren holografisch abbildenden Diffusorfolien 21 auszustatten.

Damit die den Materialförderschacht von dem Kameraraum trennenden Glasscheiben 3 selber nicht durch Ihren Glanz erkannt werden, sind einige Maßnahmen erforderlich. Zum einen wird die Kamera 6 so angeordnet, dass diese an der Stelle 22 im Winkel von 90° auf die Glasscheibe 3 sieht. In dieser Anordnung kann kein Licht der Beleuchtungskörper 9 derart auf die Glasscheibe 3 strahlen, das es als Oberflächenglanz in der Kamera 6 registriert werden kann. An den Stellen, wo dies nicht möglich ist, z. B. 23, werden entweder entspiegelte Glasscheiben 3 eingesetzt, oder aber die Beleuchtungskörper 9 werden an geeigneter Stelle durch Blenden 24 maskiert.

Fig. 2 zeigt die Anwendung dieses Prinzips unter Zuhilfenahme von Spiegeln 25, um den Abstand zwischen Kamera 6 und Inspektionsort 17, zwecks Abdeckung einer großen Arbeitsbreite zu vergrößern.

Bei großen Kanalbreiten kann es vorteilhaft sein mehrere, Detektionsvorrichtungen 26 nach den Figuren 1 und 2 über die Arbeitsbreite so zu verteilen, dass jede nur für einen Abschnitt des Kanals zuständig ist. Aber auch hier gilt, dass je Abschnitt beide Erkennungsverfahren mit nur einem Detektor und einer Auswerteinheit realisiert werden können.

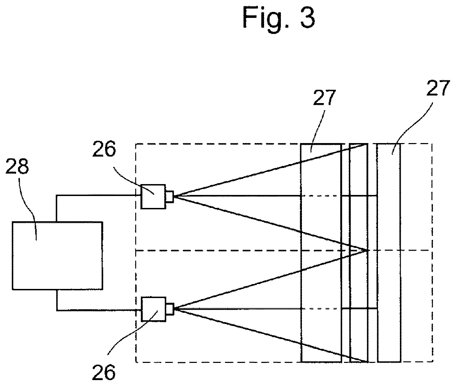

Fig. 3 zeigt eine solche Anordnung, aus einer Blickrichtung mit Materialfördereinrichtung senkrecht zur Darstellungsebene, in welcher mehrere Detektionsvorrichtungen 26 nebeneinander angeordnet sind, um eine große Arbeitsbreite abzudecken. In den Beleuchtungsmodulen 27 sind die Komponenten 7, 8, 9 nach Fig. 1 zusammengefasst. 28 zeigt z. B. eine Auswerteeinheit an welche mehrere Detektionsvorrichtungen 26 angeschlossen sind.

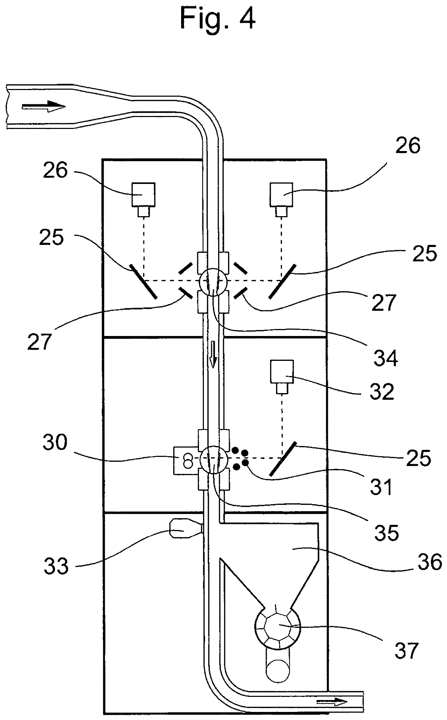

Fig. 4 zeigt die Integration der Detektionsvorrichtungen 26 nach den Figuren 1 bis 3 in einer Maschine mit durchgehendem Förderschacht mit nachfolgender Ausscheidevorrichtung. Die Detektionsvorrichtung wird mit einer Vorrichtung ergänzt, welche mit polarisiertem Durchlicht 30 in Kombination mit UV-Licht 31 transparente oder teiltransparente bzw. fluoreszierende Fremdteile zu erkennen vermag. Hierzu wird eine normale Farbkamera 32 verwendet. Über den Düsenbalken 33 werden erkannte Fremdteile aus den Inspektionsstellen 34 und 35 in den Abfallraum 36 befördert, von wo sie über eine Zellradschleuse 37 aus der Maschine befördert werden.

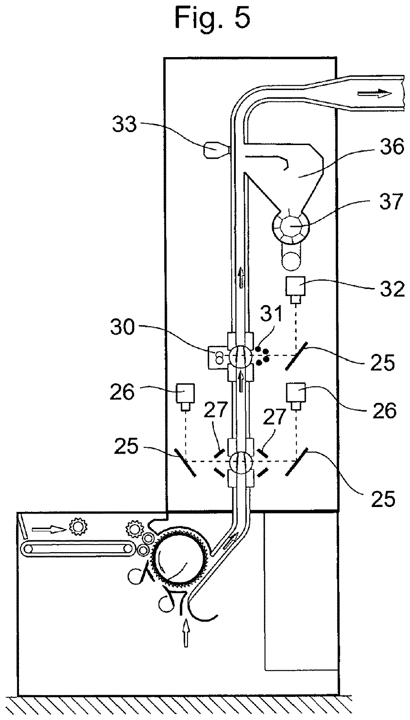

Fig. 5 zeigt die Integration der Vorrichtungen nach Fig. 1 bis 3 direkt hinter einer Öffnungswalze.

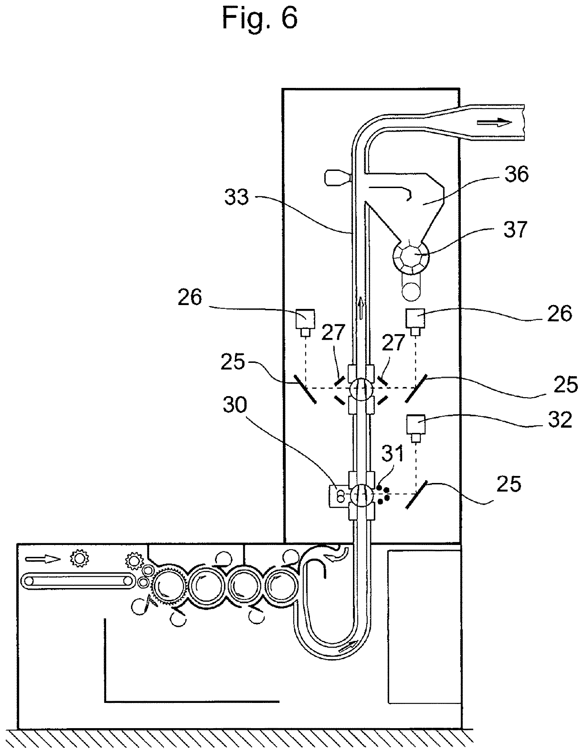

Fig. 6 zeigt eine Variante, bei welcher die beiden Inspektionsstellen vertauscht sind.

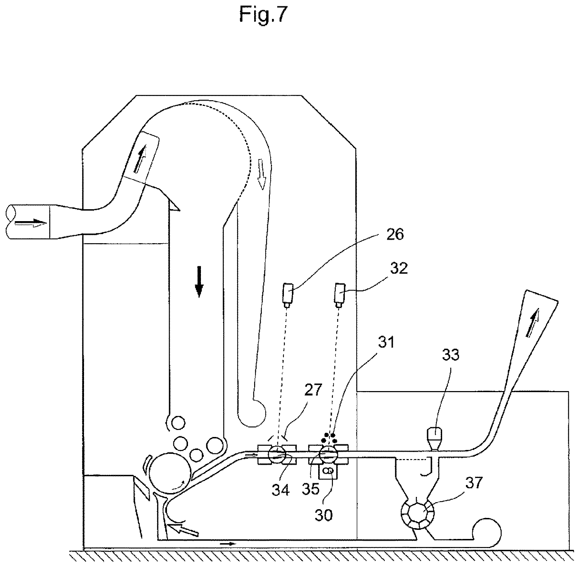

Fig. 7 zeigt die Installation beider Inspektionsstellen nach einer Öffnerwalze.

### Bezugszeichenliste

- 1: Inspektionskanal
- 2: Inspektionsbereich
- 3: transparente Wand, Glasscheibe
- 4: Faserflocken
- 5: Fremdteile
- 6: Kamera
- 7: Hintergrund
- 8: Leuchtstoffröhren
- 9: Beleuchtungskörper
- 10: Auswertung
- 13: Polarisationsfilter
- 14: Glasscheibe
- 15: Lichtquelle
- 16: ebene Fläche
- 17: Inspektionsort
- 18: Fresnellinse
- 19: Richtung
- 20: Richtungsablenkungsfolie
- 21: holografisch abbildende Diffusorfolie
- 22, 23: Stelle
- 24: Blende
- 25: Spiegel
- 26: Detektionsvorrichtungen
- 27: Beleuchtungsmodule
- 28: Auswerteeinheit
- 30: polarisiertes Durchlicht
- 31: UV-Licht
- 32: Farbkamera
- 33: Düsenbalken
- 34, 35: Inspektionsstelle
- 36: Abfallraum
- 37: Zellradschleuse

## Patentansprüche

1. Vorrichtung in der Spinnereivorbereitung
• zum Erkennen von Fremdteilen (5) aus Kunststoff in oder zwischen Faserflocken (4) eines Fasermaterials, und
• aufweisend eine Quelle, eingerichtet,
- polarisiertes Licht auf das Fasermaterial wirken zu lassen und
- mit einem Detektor (26) der Vorrichtung zusammenzuarbeiten, welcher eingerichtet ist, anhand des polarisiert ausgesendeten und reflektierten Lichtes
• zwischen polarisiertem und unpolarisiertem Licht zu unterscheiden sowie
• Farbinformation dieses Lichts aufzunehmen, und
• eingerichtet, mittels einer Auswerteeinheit gleichzeitig eine Erkennung der Fremdteile (5) mit Hilfe der Farbinformation und der Unterscheidung zwischen polarisiertem Licht aufgrund eines Oberflächenglanzes und unpolarisiertem Licht zu realisieren.

2. Vorrichtung nach Anspruch 1, **gekennzeichnet durch** Beleuchtungskörper (9),
• eingerichtet, das polarisierte Licht zu erzeugen, und
• umfassend Lichtquellen (15), eingerichtet, das polarisierte Licht aus einem möglichst großen Winkelbereich auf das Fasermaterial einzustrahlen.

3. Vorrichtung nach Anspruch 2, **dadurch gekennzeichnet, dass** die Lichtquellen (15) kreisförmig oder individuell auf das Fasermaterial ausrichtbar angeordnet sind.

4. Vorrichtung nach Anspruch 2 oder 3, **dadurch gekennzeichnet, dass** die Lichtquellen (15) segmentweise auf einer ebenen Fläche (16) angeordnet sind.

5. Vorrichtung nach Anspruch 4, **dadurch gekennzeichnet, dass** die Lichtquellen (15) mit Fresnellinsen (18) ausgestattet sind.

6. Vorrichtung nach einem der Ansprüche 2 bis 5, **gekennzeichnet durch**
• holografisch abbildende Diffusionselemente (21), eingerichtet, das Licht der Beleuchtungskörper (9) ganz oder teilweise azu vergleichmäßigen, und/oder
• Microlinsen und/oder Linsenarrays, eingerichtet, das Licht der Beleuchtungskörper ganz oder teilweise abzulenken bzw. zu formen.

7. Vorrichtung nach einem der Ansprüche 2 bis 6, **gekennzeichnet durch** holografisch abbildende Richtungsablenkungselemente (21), eingerichtet, das Licht der Beleuchtungskörper (9) ganz oder teilweise in seiner Richtung zu einem Inspektionskanal (1) abzulenken.

8. Vorrichtung nach einem der Ansprüche 2 bis 7, **dadurch gekennzeichnet, dass** die Beleuchtungskörper (9) an vorbestimmten Stellen durch Blenden (24) maskiert sind.

9. Vorrichtung nach einem der vorhergehenden Ansprüche, **dadurch gekennzeichnet, dass** die Vorrichtung
• einen Hintergrund (7) aufweist und
• eingerichtet ist, den Hintergrund (7) für die Farberkennung
- mit unpolarisiertem Licht zu beleuchten oder
- mit polarisiertem Licht zu beleuchten, wobei der Hintergrund eine diffus matte Oberfläche aufweist.

10. Vorrichtung nach einem der vorhergehenden Ansprüche, gekennzeichnet, dass die Quelle zur Beleuchtung des Fasermaterials Polarisationsfolien in sich aufweist.

11. Vorrichtung nach Anspruch 10, **dadurch gekennzeichnet, dass** die Polarisationsfolien auf einer Glasscheibe (14) oder zwischen Glasscheiben laminiert sind.

12. Vorrichtung nach einem der vorhergehenden Ansprüche, **gekennzeichnet durch** entspiegelte Glasscheiben (3), die den Fasermaterialstrom von einem Kameraraum trennend angeordnet sind.

13. Vorrichtung nach Anspruch 12, **dadurch gekennzeichnet, dass** ein Kamerablickwinkel auf die Glasscheiben (3) 90° beträgt.

14. Vorrichtung nach einem der vorhergehenden Ansprüche, **dadurch gekennzeichnet, dass**
• der Detektor (26) als Kamera (6) ausgebildet ist und
• Spiegel oder Prismen vorgesehen sind, die Sichtlinie der Kamera (6) zu falten.

15. Vorrichtung nach Anspruch 14, **dadurch gekennzeichnet, dass** die Kamera (6) einen Polarisationsfilter aufweist.

16. Vorrichtung nach Anspruch 14 oder 15, **dadurch gekennzeichnet, dass** die Kamera (6) einen Filter aufweist, eingerichtet, den Durchtritt von UV-Licht (31) und/oder infrarotem Licht zu verhindern.

17. Vorrichtung nach einem der vorhergehenden Ansprüche, **dadurch gekennzeichnet, dass** die Lichtquelle für polarisiertes Licht und der Detektor (26) angeordnet sind
• auf verschiedenen Seiten der Faserflocken (4) oder
• auf derselben Seite der Faserflocken (4).

18. Vorrichtung nach einem der vorhergehenden Ansprüche, **gekennzeichnet durch** mehrere, in Abschnitten parallel nebeneinander vorhandene Detektoren (26).

## Claims

1. A device in the spinning room preparation
• for recognizing foreign parts (5) of plastic material in or among fibre tufts (4) of a fibre material, and
• including a source, adapted
- to have polarized light act on the fibre material, and
- to cooperate with a detector (26) of the device, which, based on the emitted polarized and reflected light, is adapted to
• distinguish between polarized and non-polarized light, as well as
• capture colour information of said light, and
• adapted, by means of an evaluation unit, to simultaneously realize recognizing foreign parts (5) with the help of the colour information and distinguishing between polarized light based on the surface gloss and non-polarized light.

2. The device according to claim 1, **characterized by** lighting fittings (9),
• adapted to generate the polarized light, and
• comprising light sources (15) adapted to shine polarized light on the fibre material from an as large as possible angular range.

3. The device according to claim 2, **characterized in that** the light sources (15) are disposed orientable circularly or individually onto the fibre material.

4. The device according to claim 2 or 3, **characterized in that** the light sources (15) are disposed in segments on a flat surface (16).

5. The device according to claim 4, **characterized in that** the light sources (15) are equipped with Fresnel lenses (18).

6. The device according to any of the claims 2 to 5, **characterized by**
• holographic diffusion imaging elements (21) adapted to completely or partially harmonize the light of the lighting fittings (9), and/or
• micro-lenses and/or lens arrays adapted to completely or partially deflect, respectively to form the light of the lighting fittings.

7. The device according to any of the claims 2 to 6, **characterized by** holographic direction deflecting imaging elements (21) adapted to completely or partially deflect the direction of light of the lighting fittings (9) to an inspection channel (1).

8. The device according to any of the claims 2 to 7, **characterized in that** the lighting fittings (9) are masked at predetermined locations by screens (24).

9. The device according to any of the preceding claims, **characterized in that** the device
• includes a background (7), and
• is adapted to illuminate the background (7) for colour recognition
- with non-polarized light or
- with polarized light, wherein the background has a diffuse dim surface.

10. The device according to any of the preceding claims, **characterized in that** the source for illuminating the fibre material includes polarization films in it.

11. The device according to claim 10, **characterized in that** the polarization films are laminated on a glass pane (14) or between glass panes.

12. The device according to any of the preceding claims, **characterized by** anti-glare glass panes (3), which are disposed to separate the flow of fibre material from a camera room.

13. The device according to claim 12, **characterized in that** a camera viewing angle onto the glass panes (3) amounts to 90°.

14. The device according to any of the preceding claims, **characterized in that**
• the detector (26) is formed as a camera (6), and
• mirrors or prisms are provided to fold the line of sight of the camera (6).

15. The device according to claim 14, **characterized in that** the camera (6) has a polarization filter.

16. The device according to claim 14 or 15, **characterized in that** the camera (6) includes a filter adapted to prevent UV-light (31) and/or infrared light from passing.

17. The device according to any of the preceding claims, **characterized in that** the light source for polarized light and the detector (26) are disposed
• on different sides of the fibre tufts (4), or
• on the same side of the fibre tufts (4).

18. The device according to any of the preceding claims, **characterized by** several detectors (26) existing parallel next to each other in sections.

## Revendications

1. Dispositif dans la préparation à la filature
• pour reconnaître des corps étrangers (5) en matière plastique dans ou parmi des flocons de fibres (4) de matière fibreuse, et
• comprenant une source, adaptée
- à laisser la lumière polarisée avoir un effet sur la matière fibreuse, et
- à coopérer avec un détecteur (26) du dispositif, lequel, sur la base de la lumière émise et réfléchie, est adapté
• à distinguer entre la lumière polarisée et non-polarisée de même que
• à capter des informations de couleur de cette lumière, et
• au moyen d'une unité d'évaluation, est adaptée à réaliser simultanément une reconnaissance de corps étrangers (5) à l'aide des informations de couleur et une distinction entre la lumière polarisée sur la base du reflet superficiel et de la lumière non-polarisée.

2. Dispositif selon la revendication 1, **caractérisé par** des appareils d'éclairage (9),
• adaptés à générer la lumière polarisée, et
• comportant des sources lumineuse (15) adaptées à rayonner la lumière polarisée d'une plage angulaire la plus grande possible sur la matière fibreuse.

3. Dispositif selon la revendication 2, **caractérisé en ce que** les sources lumineuses (15) sont agencées de façon orientables circulairement ou individuellement sur la matière fibreuse.

4. Dispositif selon la revendication 2 ou 3, **caractérisé en ce que** les sources lumineuses (15) sont agencées par segments sur une surface plane (16).

5. Dispositif selon la revendication 4, **caractérisé en ce que** les sources lumineuses (15) sont équipées de lentilles de Fresnel (18).

6. Dispositif selon l'une des revendications 2 à 5, **caractérisé par**
• des éléments diffusants (21) donnant des images holographiques adaptés à complètement ou partiellement harmoniser la lumière des appareils d'éclairage (9), et/ou
• des microlentilles et/ou des groupements de lentilles adaptés à complètement ou partiellement dévier ou modeler la lumière des appareils d'éclairage.

7. Dispositif selon l'une des revendications 2 à 6, **caractérisé par** des éléments de déviation directionnelle (21) donnant des images holographiques adaptés à complètement ou partiellement dévier la direction de la lumière des appareils d'éclairage (9) vers un canal d'inspection (1).

8. Dispositif selon l'une des revendications 2 à 7, **caractérisé en ce que** des écrans (24) masquant les appareils d'éclairage (9) à des endroits prédéterminés.

9. Dispositif selon l'une des revendications précédentes, **caractérisé en ce que** le dispositif
• comprend un fond (7), et
• pour la reconnaissance de couleur, est adapté à illuminer le fond (7)
- avec de la lumière non-polarisée ou
- à illuminer avec de la lumière polarisée, le fond ayant une surface diffuse mate.

10. Dispositif selon l'une des revendications précédentes, **caractérisé en ce que** la source pour illuminer la matière fibreuse comprend des feuilles polarisantes.

11. Dispositif selon la revendication 10, **caractérisé en ce que** les feuilles polarisantes sont laminées sur une vitre en verre (14) ou entre des vitres en verre.

12. Dispositif selon l'une des revendications précédentes, **caractérisé par** des vitres en verre (3) antireflets agencés à séparer le flux de matière fibreuse d'un espace de caméra.

13. Dispositif selon la revendication 12, **caractérisé en ce qu'**un point de vue de la caméra sur la vitre en verre (3) est de 90°.

14. Dispositif selon l'une des revendications précédentes, **caractérisé en ce que**
• le détecteur (26) est aménagé comme caméra (6), et
• sont prévus des miroirs ou prismes pour plier la ligne de vue de la caméra (6).

15. Dispositif selon la revendication 14, **caractérisé en ce que** la caméra (6) comprend un filtre polarisant.

16. Dispositif selon la revendication 14 ou 15, **caractérisé en ce que** la caméra (6) comprend un filtre, adapté à empêcher le passage de lumière UV (31) et/ou de lumière infrarouge.

17. Dispositif selon l'une des revendications précédentes, **caractérisé en ce que** la source lumineuse pour la lumière polarisée et le détecteur (26) sont agencés
• de côtés différents des flocons de fibre (4) ou
• du même côté des flocons de fibre (4).

18. Dispositif selon l'une des revendications précédentes, **caractérisé par** plusieurs détecteurs (26) en sections en parallèle l'un à côté de l'autre.
